# EUROPEAN PATENT SPECIFICATION

(11) **EP 3 079 421 B1**
(45) Date of publication and mention of the grant of the patent: **09.03.2022**
(21) Application number: 15305532.2
(22) Date of filing: 10.04.2015
(51) Int. Cl.: H04W 72/00, H04W 72/12, H04W 8/18

(54) **THE METHOD FOR SCHEDULING A SERVICE, A NODE, A USER EQUIPMENT DEVICE AND A COMPUTER PROGRAM PRODUCT**
VERFAHREN ZUR PLANUNG EINES DIENSTES, KNOTEN, BENUTZERGERÄTEVORRICHTUNG UND COMPUTERPROGRAMMPRODUKT
PROCÉDÉ DE PLANIFICATION D'UN SERVICE, D'UN NOEUD, D'UN DISPOSITIF D'ÉQUIPEMENT UTILISATEUR ET PRODUIT DE PROGRAMME INFORMATIQUE

(43) Date of publication of application: 12.10.2016
(73) Proprietor: Alcatel Lucent, 91620 Nozay (FR)
(72) Inventor: Worrall, Chandrika, Swindon, SN5 7DJ (GB)
(74) Representative: Bryers LLP

(56) References cited:
- EP-A1- 2 461 533
- US-A1- 2009 149 164
- US-A1- 2011 103 288
- US-A1- 2011 194 428
- 3gpp: "3rd Generation Partnership Project; Technical Specification Group Radio Access Network; Evolved Universal Terrestrial Radio Access (E-UTRA); Radio Resource Control (RRC); Protocol specification (Release 10)", 3GPP TS 36.331 V10.0.0, 1 December 2010 (2010-12-01), XP055124679, Retrieved from the Internet: URL:http://www.3gpp.org/ftp/Specs/archive/ 36_series/36.331/36331-a00.zip [retrieved on 2014-06-23]
- "3rd Generation Partnership Project; Technical Specification Group Radio Access Network; Evolved Universal Terrestrial Radio Access (E-UTRA); Study on group communication for E-UTRA (Release 12)", 3GPP STANDARD; 3GPP TR 36.868, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V12.0.0, 18 March 2014 (2014-03-18), pages 1-23, XP050769914, [retrieved on 2014-03-18]

## Description

### TECHNICAL FIELD

Aspects relate, in general, to a method for scheduling a service, a node, a user equipment device and a computer program product.

### BACKGROUND

In a wireless telecommunication system, a multicast service can be in the form of a unidirectional point-to-multipoint (PTM) service in which data is transmitted from a single source, such as an evolved NodeB (eNB) of the system, to multiple terminals forming a group, e.g. user equipment (UE) in the associated broadcast service area. Typically, for example, only users that are subscribed to or part of the group will receive the multicast services.

US 2011/0103288 A1 discloses a method of transmitting system information related to point-to-multipoint service in which a change to the service is made at a modification period boundary. US 2009/149164 discloses a system for providing multimedia broadcast multicast services (MBMS) using a single cell point-to-multipoint (SC-PTM) communication. US

2011/194428 discloses methods and apparatuses including reception of a MBMS control channel (MCCH) notification periodically over a PDCCH.

Of interest is how to enable single cell PTM (SC-PTM) in a radio efficient manner. When compared to MBMS transmissions for example, single cell PTM can provide radio resource optimization at cell level. That is, MBMS transmissions allocate the whole of a sub-frame for one physical multicast channel (PMCH) and unused radio resources are wasted if there is not sufficient user plane data to fill the whole sub-frame. SC-PTM on the other hand schedules a service over the Physical Downlink Shared Channel (POSCH) using PRB (physical resource block) allocation. Thus SC-PTM enables the radio resource allocation as needed.

### SUMMARY

Technical features of the invention are specified in the appended independent claims.

### BRIEF DESCRIPTION OF THE DRAWINGS

Embodiments will now be described, by way of example only, with reference to the accompanying drawings, in which:
Figure I is a schematic representation of procedures for group scheduling, including high-level interactions between different entities that involve group communication according to an example;
Figures 2a, 2b are schematic representations of a periodic pattern for SC-PTM scheduling according to an example;
Figures 3a, 3b are schematic representations of a periodic pattern for SC-PTM scheduling according to another example;
Figures 4a, 4b are schematic representations of a periodic pattern for SC-PTM scheduling according to another example;
Figure 5 is a schematic representation of a periodic pattern for SC-PTM scheduling according to another example;
Figures 6a, 6b are schematic representations of a periodic pattern for SC-PTM scheduling according to another example;
Figure 7 is a schematic representation of data scheduling on DL-SCH according to an example;
Figure 8a is a schematic representation of an exemplary legacy PDCCH framework,
Figure 8b is a schematic representation of a signalling format providing subsequent scheduling information together with current scheduling information using PDCCH according to an example;
Figure 9 is a schematic representation of MAC format for multiplexing user traffic with next scheduling info transmitted on PDSCH according to an example; and
Figure 10 is a schematic representation of a wireless telecommunication network suitable for point-to-multipoint transmission according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

It is desirable to support SC-PTM for both idle and connected UEs - that is, UEs in an RRC connected state and UEs in an RRC idle mode of operation, hereinafter also referred to as (RRC) idle state. Generally, UEs are placed or sent into an idle mode to reduce power consumption. However, if idle UEs are required to monitor the physical downlink control channel (PDCCH) for each sub-frame in order to be able to receive a SC-PTM transmission then the idle mode advantage in terms of power consumption is obviated.

A similar scenario occurs for UEs in a discontinuous reception (DRX) mode of operation in which battery life of the UE is conserved for a by UE by using data transfer phases in which data transfer occurs, whilst at other times the UE turns its receiver off and enters a low power mode of operation. When in DRX-off mode, a UE is not required to monitor PDCCH to enable UE power saving. However, if a service using SC-PTM is to be transmitted at any time, the UE will be required to monitor PDCCH at all times (even when the UE interested service is not scheduled) which results in unnecessary UE power consumption.

In a group scheduling scheme, all users within a cell that are interested in participating in the same Group Communication System Enablers (GCSE) group can be assigned with a common Group radio network temporary identifier (G-RNTI). These users will then be scheduled by an eNB with the G-RNTI, thus the group communication data is delivered via shared radio resources to multiple group members.

Figure I is a schematic representation of a procedure for group scheduling, including high-level interactions between different entities involved in the group communication according to an example. As is known, a UE 101 can initiate a group communication setup for a particular GCSE group using application level signaling (1). The GCSE Application server (AS) 103 may then perform authorization. Following a group communication bearer request from the GCSE AS 103 (2), the core network (evolved packet core - EPC) 105 and eNB 107 setup a bearer in the downlink for the group communication (3), followed by sending a group communication bearer response to the GCSE AS 103 (4). If there are multiple users interested in the same GCSE group, a common bearer might be used.

The eNB 107 acquires information regarding which GCSE group(s) each UE 101 is interested in participating in. The eNB 107 could obtain such information for example from the EPC 105 or from a UE 101 report. For a particular GCSE group, depending on the number of interested UEs, the eNB 107 decides which scheduling scheme to use, i.e. Point-to-Point (PtP) or Point-to-Multipoint (PtM), hereinafter also referred to as group scheduling. I n another example, the EPC 105 may decide which scheduling scheme to use, i.e. PtP or PtM and inform the EPC decision to the eNB 107.

If the eNB 107 decides to use group scheduling for a particular GCSE group, the Group RNTI is configured, i.e. a mapping between the Group RNTI and the corresponding GCSE group identifier is established (6). The configuration could be achieved by either dedicated RRC signaling or shared RRC signaling (system information block (SIB) scheduling or Paging) for example.

The eNB 107 performs group scheduling of data for the GCSE group (7), e.g. group communication data. The data may be forward to the eNB 107 by the GCSE AS 103. The PDCCH for downlink radio resource assignment is scrambled by the corresponding Group RNTI. The UE 101 decodes the group communication data (8). Support of hybrid automatic repeat request (HARQ) feedback may allow for the decoded data (indication of successful or unsuccessful decoding).

According to an example, there is provided a method for enabling flexible SC-PTM transmission for both idle and connected mode UEs and at the same time enabling UE power saving, in which a transmission instance of a given service over SC-PTM is provided to a UE that is capable of receiving SC-PTM and/or the UEs who are interested of receiving a service over SC-PTM. In an example, a UE can be provided with scheduling information for a service to be transmitted over SC-PTM by monitoring the radio network temporary identifier (RNTI). Although not discussed in detail hereinafter, the UE may instead of monitoring the RNTI, monitor information transmitted together with an RNTI. The UE may monitor the RNTI during predefined transmission instances. More particularly, the UE can monitor the group RNTI (G-RNTI) during these instances. As the service is to be transmitted at the predefined transmission instances, also referred to as scheduling instances, as provided in the scheduling information, the UE is able to enter a low power mode at other times in order to conserve power. The scheduling instances may be scheduled periodically, but may also be scheduled at non-periodic pre-defined instances.

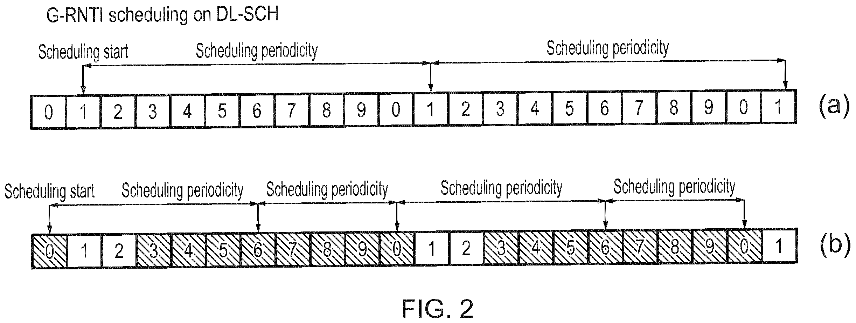

Figures2a, 2b are schematic representations of a periodic pattern for SC-PTM scheduling according to an example. In this example, the G-RNTI is scheduled on the downlink shared channel (DL-SCH). As is well known to a person of skilled in the art, the DL-SCH is mapped to two physical channels, i.e. the physical downlink control channel for control information and the physical downlink shared channel (PDSCH) for traffic data transmission.

In this example, a given service to be provided over SC-PTM transmissions is scheduled in a periodic manner, and the periodicity and the scheduling instances is provided to the UE together with G-RNTI mapping information. The UEs in a group therefore only listen to the SC-PTM at the signaled scheduling occasions, and are thus able to enter a low power mode at other times in order to conserve power. Providing the scheduling information together with the G-RNTI mapping information enables signaling compression, as signaling overhead can be reduced. Of course, as will be understood by a person of skilled in the art, a similar arrangement may be established if the scheduling information relates to a non-periodic schedule.

As exemplified by the pattern depicted in figures 2a, 2b, UEs need only listen to or monitor the SC-PTM at the signaled scheduling occasions, i.e. the instances at which arrows are pointing downwards in FIGS. 2a and 2b. If scheduling information is provided for the corresponding G-RNTI, a UE can decode the physical downlink shared channel (PDSCH) physical resource block (PBR) resources as indicated in the scheduling assignment. If the G-RNTI does not include scheduling information at the scheduling interval, the UE can check for scheduling information for the group using the G-RNTI at a subsequent scheduling instance. The configuration detail of the periodic pattern for scheduling instances can either be provided using dedicated RRC signaling or broadcast signaling (via existing or new SIB).

In figure 2a, the scheduling periodicity is computed in the time domain, thus when computing all sub-frames are counted. In the shown example, the scheduling starts at sub-frame I and then counts up to the next sub-frame 1. Note that not all sub-frames can be used for transmission of SC-PTM as the SC-PTM can exist together with Multimedia Broadcast Multicast Service Single Frequency Network (MBSFN) in a cell. For example, SC-PTM is used for delivery of service I while MBSFN is used for delivery of service 2. In such cases, some sub-frames are configured for MBSFN.

In figure 2b, the scheduling periodicity is computed in the frequency domain using Frequency Division Duplex (FDD), only taking into account the sub-frame allocated for unicast transmissions. In the example shown in figure 2b, sub-frames #1 and #2 are allocated for MBSFN signaled using SIB2. The example of figure 2b thus illustrates a scheduling periodicity of 4 sub-frames. Note that in the example depicted in figure 2b only sub-frames #1,2,3,6,7 and 8 can potentially be configured as MBSFN sub-frames.

The signaling related to both Figures 2a and 2b is designed to indicate the start of scheduling (indicated by the most left downwardly oriented arrows in the Examples shown in Figures 2a, 2b) and the scheduling periodicity (denoted by the double-arrowed horizontal lines in the Examples shown in Figures 2a, 2b). The start of the scheduling is provided corresponding to a Single Frequency Network (SFN) boundary either relating to one radio frame or multiple radio frame boundaries.

Each scheduling occasion is known to the UE. Therefore, a UE joining the service while the service is ongoing can listen to the corresponding G-RNTI scheduling in the next scheduling occasion. Accordingly, there is support for a UE joining a service transmission at any time.

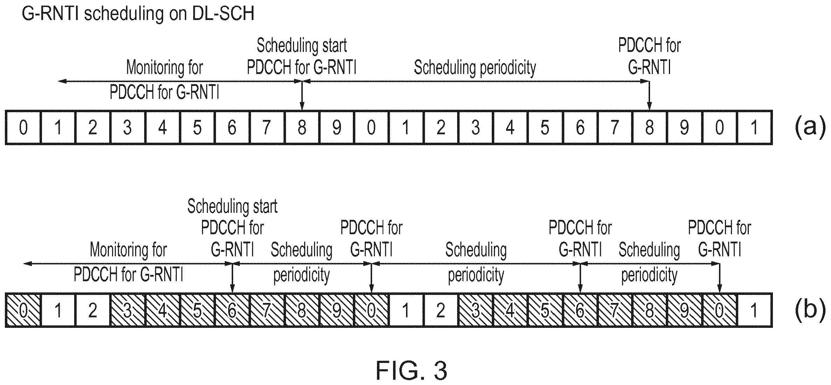

Figures 3a, 3b are schematic representations of a periodic pattern for SC-PTM scheduling according to another example. Also in this example, the G-RNTI is scheduled on the DL-SCH. Similarly to the process described above with reference to figures 2a, 2b, the scheduling period can be signaled to the UE using dedicated RRC signaling or broadcast signaling. Also, the scheduling period may be provided in the time domain (figure 3a) or only in sub-frames used for unicast transmission in the frequency domain (figure 3b).

In this example, configured scheduling occurrences can be provided so that the start of the service transmission is kept flexible. After the start of the service transmission, subsequent scheduling can be performed according to a pre-configured scheduling interval. This model suits a legacy MBSFN architecture where a synchronization protocol (SYNC) is used for user plane data synchronization. SYNC packets are sent occasionally, and so having configured scheduling periodicity to meet the requirement of SYNC is suitable for a legacy Multimedia Broadcast Multicast Service (MBMS) architecture.

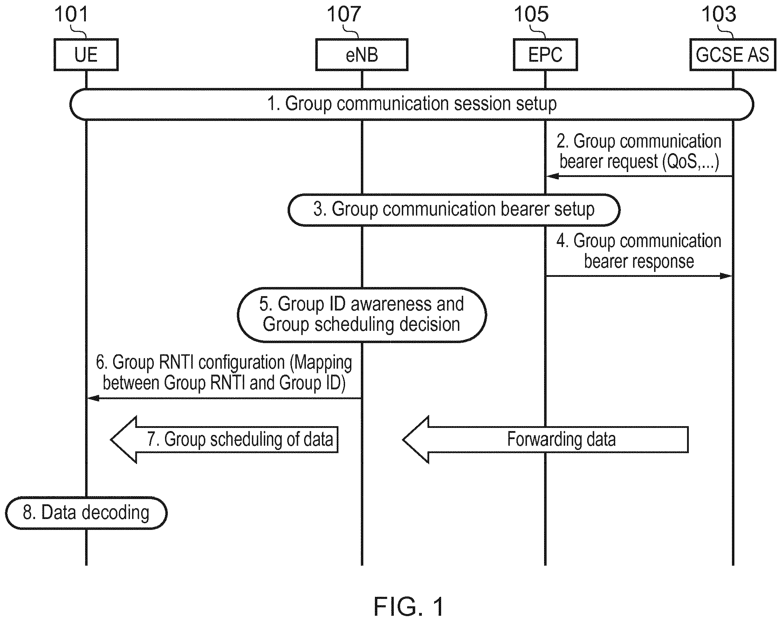

As described above with reference to figure 1, a given service over SC-PTM can be scheduled periodically. I n an example, the scheduling periodicity for the service can be provided to the UE together with G-RNTI configuration information. Providing the scheduling information to the UE together with G-RNTI may allow flexibility for the network with respect to selecting radio resources for the transmission of the service at the time of transmission.

The start of the service transmission is flexible and depends on the availability of user plane traffic for the service. Initial scheduling for the service can be provided to the UE over PDCCH, and subsequent scheduling for the same service can occur after a pre-configured scheduling period. Thus, a UE may go to sleep mode during two scheduling occasions.

As the first scheduling of the service in this example is provided to the UE over PDCCH, and the next scheduling for the same service occurs after a pre-configured scheduling period that has already been signaled to the UE, the UE is solely required to monitor PDCCH for the first scheduling. For subsequent scheduling the UE monitors PDCCH only in sub-frames which satisfy the criteria for the scheduling occurrence.

Prior to the start of a service, the UE can monitor the PDCCH for G-RNTI scheduling. The time period for monitoring for the service start can be provided to the UE using RRC signaling together with G-RNTI mapping information. In another example, the service start time can be provided as part of a user service description (USD) provided to the UE over application layer signaling. Therefore, the UE starts monitoring PDCCH for G-RNTI at the time indicated as the service start time in the USD for example.

Thus, even though the service is scheduled periodically, the start of the service is flexible, and a UE can monitor the PDCCH for the corresponding G-RNTI scheduling continuously until it finds the scheduling for the G-RNTI (most left downwardly oriented arrow in Figures 3a, 3b), which may be denoted as scheduling start. After finding the first scheduling occurrence, the UE may go into sleep/idle mode until the next scheduling occasion after a pre-configured scheduling period. Any UE joining the service while it is ongoing can monitor the PDCCH continuously until finding the G-RNTI on PDCCH.

According to an example, in order to save PDCCH resources, the service can be scheduled so that the same radio resource allocation used for the first scheduling is also used for subsequent scheduling. Accordingly, a UE can be provided with the scheduling period together with the G-RNTI configuration for the service of interest. The UE can monitor the PDCCH for the corresponding G-RNTI for the first scheduling of the service. PDCCH addressed to the G-RNTI UEs provides the radio resource allocation for the service. Subsequent transmission of the service can use the same radio resources as signaled on the first PDCCH but can occur after the configured scheduling period.

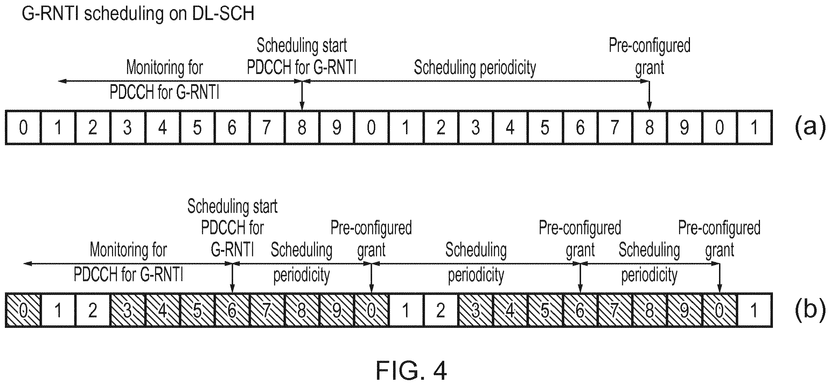

Figures 4a, 4b depict a schematic representation of a periodic pattern for SC-PTM scheduling according to yet another example. In particular, as above, the scheduling period may be provided in the time domain (figure 4a) or only in sub-frames used for unicast transmission in the frequency domain (figure 4b). Again, in this example, the G-RNTI is scheduled on the DL-SCH.

In this example, a new scheduling assignment can be sent to UEs at each scheduling occurrence as described above. However, the transmission of scheduling assignments using PDCCH can be avoided. For example, a UE can receive a scheduling assignment indicating the radio resources allocated on the PDSCH for SC-PTM identified by the G-RNTI at the start of the service transmission. The subsequent scheduling can use the same PBR radio resource assignment in the indicated scheduling occasions. Therefore, PDCCH resources can be efficiently utilized. This is similar to a semi-persistent-scheduling mechanism used for unicast transmissions. Considering that push to talk calls represent similar characteristics to voice, pre-configured resource allocation as described above could also be utilized for SC-PTM. Moreover, the SC-PTM is intended for a group of UEs and it is likely to be broadcast in the whole cell. Therefore, the use of MCS can be predetermined, hence the use of PBR allocation. The first scheduling of the service is therefore kept flexible, allowing the service start at any time.

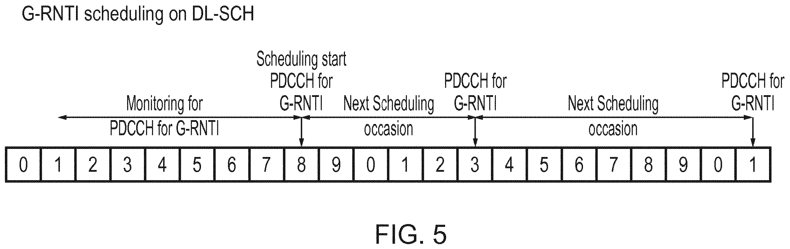

Figure 5 is a schematic representation of a periodic pattern for SC-PTM scheduling according to yet another example. Again, in this example, the G-RNTI is scheduled on the DL-SCH. Furthermore, only the time domain is shown.

In this example, the first scheduling of a service can be kept flexible, allowing the service start at any time, with subsequent scheduling of the service in time provided with the first scheduling. That is, the next or subsequent scheduling occasion is provided in the preceding (first) scheduling allowing a UE to go into a sleep mode between the two occurrences of scheduling.

Accordingly, the first scheduling of the service is kept flexible, allowing the service start at any time since the scheduling information for the next (subsequent) scheduling instance is provided together with the current scheduling information. The scheduling time of the next scheduling can be provided with the current scheduling. Alternatively, all of scheduling information for the next scheduling including the radio resource assignment and sub-frame information can be provided together with the current scheduling.

The scheduling intervals can be dynamic, such that each scheduling occasion can be flexible and may be configured based upon the pattern of traffic from available traffic or an eNB implementation based decision. The next scheduling information can either be provided as control data or together with the user plane data. When using control data for transmitting the subsequent scheduling information, a new format is required for PDCCH. On the other hand, when using user plane data for the transmission of subsequent scheduling information, a new MAC or RLC format is defined to multiplex user plane data and the scheduling information for the next scheduling occurrence.

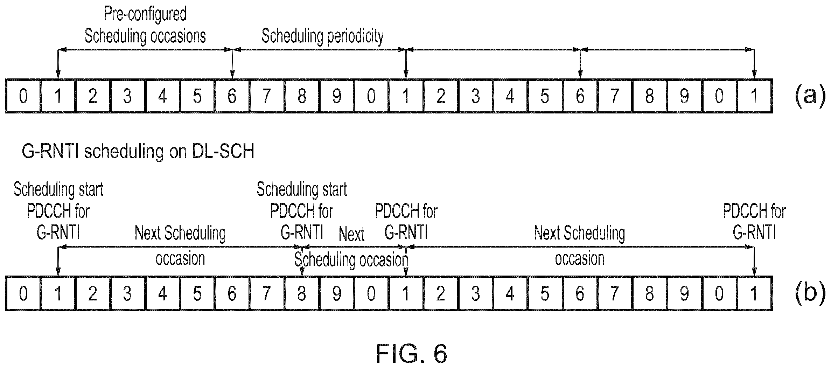

In this connection, figures 6a, 6b are schematic representations of a periodic pattern for SC-PTM scheduling according to an example. Figure 6a depicts pre-configured scheduling occasions, to be discussed below, while Figure 6b depicts scheduling of G-RNTI on the DL-SCH in the time domain.

In this example, as depicted in Figure 6a, a UE can be provided with a periodic scheduling occurrence for the first transmission. A UE that is interested in the service in question can listen to the configured scheduling occurrence for the service to be scheduled. Subsequent scheduling occurrences can be provided with the previous scheduling using PDCCH.

A periodic scheduling pattern can be provided to a UE in a similar way as described above with reference to figures 2a, 2b. This supports UEs joining the service at any time, where the UE is guided to the potential scheduling occasion. Those UEs listen to PDCCH for G-RNTI at the indicated scheduling occasion. If a UE does not find assignment for the G-RNTI, the UE listens to the next pre-configured scheduling occasion. If the UE finds a scheduling grant for the G-RNTI, the next scheduling of the user plane data is provided together with the current scheduling information as described above with reference to figure 5 and also depicted in Figure 6b.

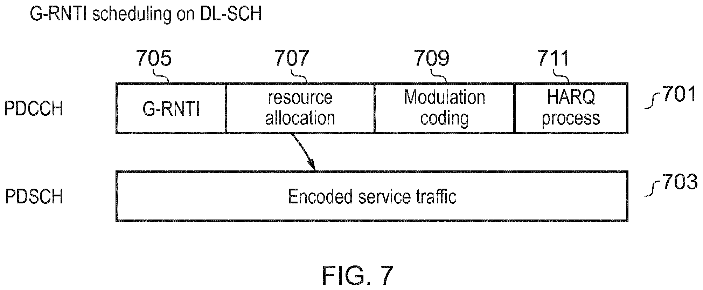

Figure 7 is a schematic representation of data scheduling on DL-SCH according to another example. Figure 7 depicts two types of physical channels; one for control information and the other for delivery of encoded service traffic data. In particular, the Physical downlink control channel (PDCCH) 701 is used for control information. The Physical downlink shared channel, PDSCH, 703 is used for the traffic delivery. PDCCH 701 is addressed to G-RNTI (that is, to UEs within a group identified by the G-RNTI) and signals allocated radio resources on PDSCH 703 for the delivery of traffic (scheduling information for the traffic data delivery). Moreover PDCCH 701 indicates the modulation coding scheme used for traffic data encoding and HARQ process (if HARQ is used). This information is used by the UE to decode the encoded service traffic delivered on PDSCH. Accordingly, as shown in figure 7, the PDCCH 701 includes G-RNTI data 705, resource allocation data 707, modulation coding 709 and HARQ process 711.

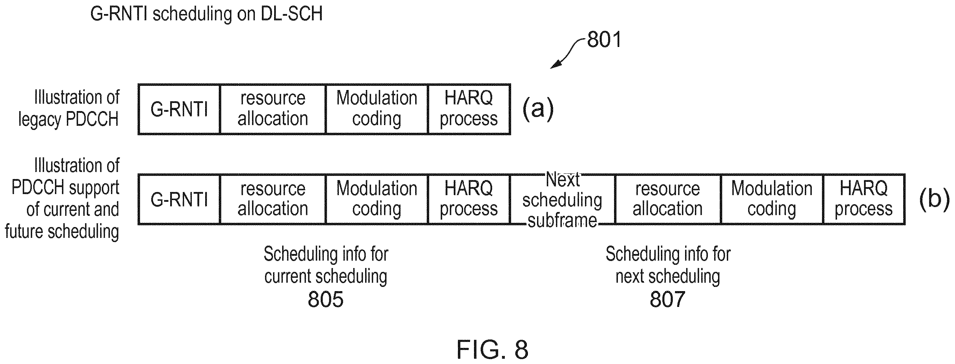

According to an example, when the scheduling information for subsequent scheduling is provided in the current scheduling, it can either use control (PDCCH) or user data. With PDCCH, the current PDCCH provides the scheduling information for the current transmission time interval (TTI). In order to include the scheduling for subsequent TTIs, the PDCCH can be modified. In this connection, Figure 8a is a schematic representation of a legacy PDCCH framework 801. Figure 8b is a schematic representation of a signalling format providing subsequent scheduling information together with current scheduling information using PDCCH according to an example. The legacy PDCCH framework 801 in Figure 8a is similar to the PDCCH depicted in Figure 7 and includes G-RNTI data, resource allocation data, modulation coding and HARQ process (if HARQ is used). The exemplary PDCCH framework 803 of Figure 8b includes information for current scheduling 805 as well as next, or subsequent, scheduling 807. Providing the scheduling information for the subsequent scheduling enables the UE to go to power saving mode until the next scheduling instance. Moreover, providing radio resource scheduling for the subsequent scheduling also saves PDCCH resources.

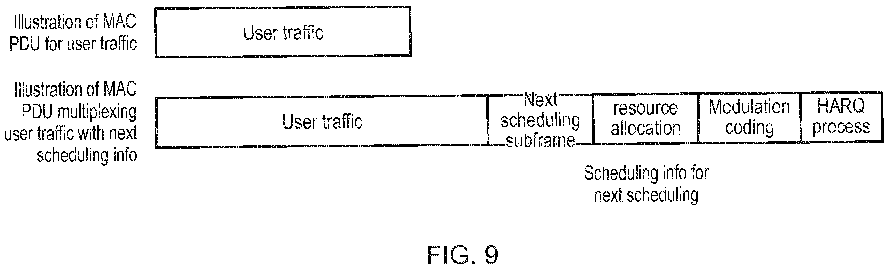

With use of user data to deliver the next or subsequent scheduling information, the UE can be provided with information on how to extract the scheduling info from the user traffic. A data format can be defined at either MAC or RLC. Figure 9 is a schematic representation of MAC format for multiplexing user traffic with next scheduling information transmitted on PDSCH according to an example. By multiplexing the subsequent scheduling information with user traffic the same PDCCH may be kept, i.e. without modification. The UE decodes the traffic data. Having scheduling information multiplexed with traffic data may reduce complexity at the UE.

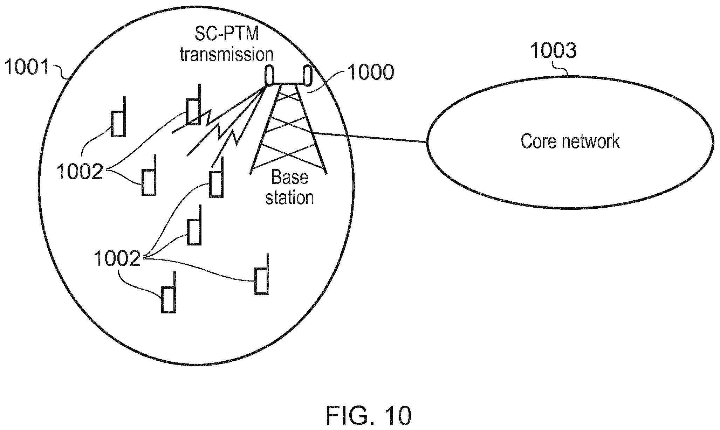

Figure 10 is a schematic representation of a wireless telecommunication network suitable for point-to-multipoint transmission. The wireless telecommunication network includes a base station or node 1000 defining a cell 1001 in which multiple UEs 1002 reside. The base station 1000 is communicatively connected to a core network 1003 and capable of performing a (single cell) point-to-multipoint transmission.

The processes and methods described herein may be implemented in hardware, software, firmware, or any combination thereof. If implemented in software, the functions may be stored as one or more instructions, code or machine readable instructions on a non-transitory machine-readable medium. Such media can include both computer storage and communication media that facilitate transfer of a computer program from one place to another for example.

The present inventions can be embodied in other specific apparatus and/or methods. The described embodiments are to be considered in all respects as illustrative and not restrictive. In particular, the scope of the invention is indicated by the appended claims rather than by the description and figures herein.

## Claims

1. A method for scheduling a service in a wireless telecommunication network in a single cell point-to-multipoint transmission for multiple user equipment devices (101) within a cell of the network, the method comprising:
providing scheduling information (805) for the service to at least one of the respective ones of the user equipment devices as part of or together with a radio network temporary identifier transmitted over a Physical Downlink Control Channel, of the network, the scheduling information comprising a Physical Resource Block allocation on a Physical Downlink Shared Channel of the network for an initial scheduling instance of the service and multiple predefined subsequent scheduling instances (807) of the service occurring at predefined periodic intervals, to allow the user equipment device to monitor the Physical Downlink Control Channel for transmission according to the predefined periodic intervals;
wherein the predefined periodic intervals are communicated to the user equipment device in the initial scheduling instance transmitted to the user equipment as part of or together with the radio network temporary identifier communicated over the Physical Downlink Control Channel of the network, and
wherein the Physical Resource Block allocation for the initial scheduling instance is used for the subsequent scheduling instances.

2. A method as claimed in claim 1, wherein the scheduling information is provided together with mapping information of a group Radio Network Temporary Identifier (705) for the user equipment device.

3. A method as claimed in claim 1, wherein the scheduling information is provided together with configuration information of a group Radio Network Temporary Identifier for the user equipment device.

4. A method as claimed in claim any of claims 1 to 3, wherein the timing of a subsequent scheduling occurrence for the service is communicated to the user equipment device in a preceding scheduling instance.

5. A method as claimed in claim 4, wherein the preceding scheduling instance occurs at the start of the service.

6. A node (1000) in a wireless telecommunication network operable to transmit a single cell point-to-multipoint transmission for multiple user equipment devices (1002) within a cell (1001) of the network, wherein the node is operable to:
provide scheduling information (805) for the service to at least one of the respective ones of the user equipment devices as part of or together with a radio network temporary identifier transmitted over a Physical Downlink Control Channel of the network by the node, the scheduling information comprising a Physical Resource Block allocation on a Physical Downlink Shared Channel of the network for an initial scheduling instance of the service and multiple predefined subsequent scheduling instances (807) of the service occurring at predefined periodic intervals, to allow the user equipment device to monitor the Physical Downlink Control Channel for transmission according to the predefined periodic intervals;
wherein the node is operable to transmit the initial scheduling instance of multiple predefined scheduling instances of the service to the user equipment as part of or together with the radio network temporary identifier communicated over the Physical Downlink Control Channel of the network by the node, and
wherein the Physical Resource Block allocation for the initial scheduling instance is used for the subsequent scheduling instances.

7. A node as claimed in claim 6, wherein the node is operable to provide the scheduling information together with mapping information of a group Radio Network Temporary Identifier (705) to be transmitted by the node for the user equipment device.

8. A node as claimed in claim 6, wherein the node is operable to provide the scheduling information together with configuration information of a group radio network temporary identifier to be transmitted by the node for the user equipment device.

9. A user equipment device (101) operable to receive a single cell point-to-multipoint transmission for a service in a cell (1001) of a wireless telecommunication network, wherein the user equipment device is operable to receive scheduling information (805) for the service as part of or together with a radio network temporary identifier transmitted over a Physical Downlink Control Channel of the network, the scheduling information comprising a Physical Resource Block allocation on a Physical Downlink Shared Channel of the network for an initial scheduling instance of the service and multiple predefined subsequent scheduling instances (807) of the service occurring at predefined periodic intervals, to allow the user equipment device to monitor the Physical Downlink Control Channel for transmission according to the predefined periodic intervals;
wherein the predefined periodic intervals are communicated to the user equipment device in the initial scheduling instance transmitted to the user equipment as part of or together with the radio network temporary identifier communicated over the Physical Downlink Control Channel of the network., and
wherein the Physical Resource Block allocation for the initial scheduling instance is used for the subsequent scheduling instances.

10. A user equipment device as claimed in claim 9, wherein the user equipment device is operable to receive the scheduling information together with mapping information of a group radio network temporary identifier (705) for the user equipment device.

11. A user equipment device as claimed in claim 9, wherein the user equipment device is operable to receive the scheduling information together with configuration information of a group radio network temporary identifier (705) for the user equipment device.

12. A computer program product, comprising a computer usable medium having computer readable program code embodied therein, said computer readable program code adapted to be executed to implement a method, in a wireless telecommunications network for scheduling a service in a single cell point-to-multipoint transmission as claimed in any of claims 1 to 5.

13. A user equipment device claimed as claim in claim 9, wherein the predefined periodic intervals are communicated to the user equipment device in an initial scheduling instance transmitted to the user equipment as part of or together with a group radio network temporary identifier communicated over the Physical Downlink Control Channel of the network.

14. A user equipment device as claimed in claim 9, wherein the predefined periodic intervals represent a number of subframes.

15. A user equipment device as claimed in claim 9, wherein the periodic intervals are communicated to the user equipment device using RRC signaling.

16. A user equipment device as claimed in claim 9, wherein the user equipment device is operable to monitor the Physical Downlink Control Channel for the corresponding scheduling until it finds the scheduling, and may go into sleep or idle mode until the next scheduling occasion after a pre-configured scheduling period.

17. A user equipment device as claimed in claim 9, wherein instead of predefined periodic intervals a non-periodic schedule is transmitted.

18. A user equipment device as claimed in claim 9, wherein the user equipment device is in a radio resource control connected or idle state.

## Patentansprüche

1. Verfahren zum Planen eines Dienstes in einem drahtlosen Telekommunikationsnetz in einer Einzelzellen-Punkt-zu-Mehrpunkt-Übertragung für mehrere Benutzergerätevorrichtungen (101) innerhalb einer Zelle des Netzes, wobei das Verfahren umfasst:
Bereitstellen von Planungsinformationen (805) für den Dienst an mindestens einer der entsprechenden Benutzergerätevorrichtungen als Teil von oder zusammen mit einem Radio Network Temporary Identifier, der über einen Physical Downlink Control Channel des Netzes übertragen wird, wobei die Planungsinformationen die Zuweisung eines Physical Resource Block auf einem Physical Downlink Shared Channel des Netzes für eine anfängliche Planungsinstanz des Dienstes und mehrere vorgegebene nachfolgende Planungsinstanzen (807) des Dienstes, die in vorgegebenen regelmäßigen Intervallen auftreten, umfassen, damit die Benutzergerätevorrichtung den Physical Downlink Control Channel gemäß den vorgegebenen regelmäßigen Intervallen für die Übertragung überwachen kann;
wobei die vorgegebenen regelmäßigen Intervalle an die Benutzergerätevorrichtung in der anfänglichen Planungsinstanz übermittelt werden, die als Teil von oder zusammen mit dem Radio Network Temporary Identifier, der über den Physical Downlink Control Channel des Netzes übermittelt wird, an die Benutzergerätevorrichtung übertragen wird, und
wobei die Zuweisung des Physical Resource Block für die anfängliche Planungsinstanz für die nachfolgenden Planungsinstanzen verwendet wird.

2. Verfahren nach Anspruch 1, wobei die Planungsinformationen zusammen mit Zuordnungsinformationen eines Group Radio Network Temporary Identifier (705) für die Benutzergerätevorrichtung bereitgestellt werden.

3. Verfahren nach Anspruch 1, wobei die Planungsinformationen zusammen mit Konfigurationsinformationen eines Group Radio Network Temporary Identifier für die Benutzergerätevorrichtung bereitgestellt werden.

4. Verfahren nach einem der Ansprüche 1 bis 3, wobei der Zeitpunkt eines nachfolgenden Planungsereignisses für den Dienst in einer vorhergehenden Planungsinstanz an die Benutzergerätevorrichtung übermittelt wird.

5. Verfahren nach Anspruch 4, wobei die vorhergehende Planungsinstanz beim Start des Dienstes auftritt.

6. Knoten (1000) in einem drahtlosen Telekommunikationsnetz zur Übertragung einer Einzelzellen-Punkt-zu-Mehrpunkt-Übertragung für mehrere Benutzergerätevorrichtungen (1002) innerhalb einer Zelle (1001) des Netzes, wobei der Knoten betrieben werden kann zum:
Bereitstellen von Planungsinformationen (805) für den Dienst an mindestens eine der entsprechenden Benutzergerätevorrichtungen als Teil von oder zusammen mit einem Radio Network Temporary Identifier, der über einen Physical Downlink Control Channel des Netzes durch den Knoten übertragen wird, wobei die Planungsinformationen die Zuweisung eines Physical Resource Block auf einem Physical Downlink Shared Channel des Netzes für eine anfängliche Planungsinstanz des Dienstes und mehrere vorgegebene nachfolgende Planungsinstanzen (807) des Dienstes, die in vorgegebenen regelmäßigen Intervallen auftreten, umfassen, damit die Benutzergerätevorrichtung den Physical Downlink Control Channel gemäß den vorgegebenen regelmäßigen Intervallen für die Übertragung überwachen kann;
wobei der Knoten die anfängliche Planungsinstanz von mehreren vorgegebenen Planungsinstanzen des Dienstes als Teil von oder zusammen mit dem Radio Network Temporary Identifier, der durch den Knoten über den Physical Downlink Control Channel des Netzes übermittelt wird, an die Benutzergerätevorrichtung übertragen kann, und
wobei die Zuweisung des Physical Resource Block für die anfängliche Planungsinstanz für die nachfolgenden Planungsinstanzen verwendet wird.

7. Knoten nach Anspruch 6, wobei der Knoten die Planungsinformationen zusammen mit Zuordnungsinformationen eines Group Radio Network Temporary Identifier (705) bereitstellen kann, der durch den Knoten für die Benutzergerätevorrichtung zu übertragen ist.

8. Knoten nach Anspruch 6, wobei der Knoten die Planungsinformationen zusammen mit Konfigurationsinformationen eines Group Radio Network Temporary Identifier bereitstellen kann, der durch den Knoten für die Benutzergerätevorrichtung zu übertragen ist.

9. Benutzergerätevorrichtung (101) zum Empfangen einer Einzelzellen-Punkt-zu-Mehrpunkt-Übertragung für einen Dienst in einer Zelle (1001) oder einem drahtlosen Telekommunikationsnetz, wobei die Benutzergerätevorrichtung Planungsinformationen (805) für den Dienst als Teil von oder zusammen mit einem Radio Network Temporary Identifier, der über einen Physical Downlink Control Channel des Netzes übertragen wird, empfangen kann, wobei die Planungsinformationen die Zuweisung eines Physical Resource Block auf einem Physical Downlink Shared Channel des Netzes für eine anfängliche Planungsinstanz des Dienstes und mehrere vorgegebene nachfolgende Planungsinstanzen (807) des Dienstes, die in vorgegebenen regelmäßigen Intervallen auftreten, umfassen, damit die Benutzergerätevorrichtung den Physical Downlink Control Channel gemäß den vorgegebenen regelmäßigen Intervallen für die Übertragung überwachen kann;
wobei die vorgegebenen regelmäßigen Intervalle an die Benutzergerätevorrichtung in der anfänglichen Planungsinstanz übermittelt werden, die als Teil von oder zusammen mit dem Radio Network Temporary Identifier, der über den Physical Downlink Control Channel des Netzes übermittelt wird, an die Benutzergerätevorrichtung übertragen wird, und
wobei die Zuweisung des Physical Resource Block für die anfängliche Planungsinstanz für die nachfolgenden Planungsinstanzen verwendet wird.

10. Benutzergerätevorrichtung nach Anspruch 9, wobei die Benutzergerätevorrichtung die Planungsinformationen zusammen mit Zuordnungsinformationen eines Group Radio Network Temporary Identifier (705) für die Benutzergerätevorrichtung empfangen kann.

11. Benutzergerätevorrichtung nach Anspruch 9, wobei die Benutzergerätevorrichtung die Planungsinformationen zusammen mit Konfigurationsinformationen eines Group Radio Network Temporary Identifier (705) für die Benutzergerätevorrichtung empfangen kann.

12. Computerprogrammprodukt umfassend ein von einem Computer nutzbares Medium mit darauf enthaltenem computerlesbarem Programmcode, wobei der computerlesbare Programmcode für die Implementierung eines Verfahrens in einem drahtlosen Telekommunikationsnetz zur Planung eines Dienstes in einer Einzelzellen-Punkt-zu-Mehrpunkt-Übertragung nach einem der Ansprüche 1 bis 5 ausgelegt ist.

13. Benutzergerätevorrichtung nach Anspruch 9, wobei die vorgegebenen regelmäßigen Intervalle an die Benutzergerätevorrichtung in einer anfänglichen Planungsinstanz übermittelt werden, die als Teil von oder zusammen mit einem Group Radio Network Temporary Identifier, der über den Physical Downlink Control Channel des Netzes übermittelt wird, an die Benutzergerätevorrichtung übertragen wird.

14. Benutzergerätevorrichtung nach Anspruch 9, wobei die vorgegebenen regelmäßigen Intervalle eine Anzahl von Subframes darstellen.

15. Benutzergerätevorrichtung nach Anspruch 9, wobei die regelmäßigen Intervalle mittels RRC-Signalisierung an die Benutzergerätevorrichtung übermittelt werden.

16. Benutzergerätevorrichtung nach Anspruch 9, wobei die Benutzergerätevorrichtung den Physical Downlink Control Channel für die entsprechende Planung überwachen kann, bis sie die Planung findet, und bis zum nächsten Planungsereignis nach einem vorkonfigurierten Planungszeitraum in den Standby- oder Ruhezustand wechseln kann.

17. Benutzergerätevorrichtung nach Anspruch 9, wobei anstelle vorgegebener regelmäßiger Intervalle ein nichtregelmäßiger Zeitplan übertragen wird.

18. Benutzergerätevorrichtung nach Anspruch 9, wobei sich die Benutzergerätevorrichtung in einem mit der Funkressourcensteuerung verbundenen oder im Ruhezustand befindet.

## Revendications

1. Procédé pour l'ordonnancement d'un service dans un réseau de télécommunication sans fil dans une émission de point à multipoint à cellule unique pour de multiples dispositifs d'équipement utilisateur (101) au sein d'une cellule du réseau, le procédé comprenant :
la fourniture d'informations d'ordonnancement (805) pour le service à au moins l'un des dispositifs respectifs parmi les dispositifs d'équipement utilisateur comme faisant partie d'un identifiant temporaire de réseau radio, ou conjointement avec celui-ci, émis sur un canal de commande de liaison descendante physique, du réseau, les informations d'ordonnancement comprenant une allocation de bloc de ressources physiques sur un canal partagé de liaison descendante physique du réseau pour une instance d'ordonnancement initiale du service et de multiples instances d'ordonnancement suivantes prédéfinies (807) du service survenant à des intervalles périodiques prédéfinis, pour permettre au dispositif d'équipement utilisateur de surveiller le canal de commande de liaison descendante physique pour une émission selon les intervalles périodiques prédéfinis ;
dans lequel les intervalles périodiques prédéfinis sont communiqués au dispositif d'équipement utilisateur dans l'instance d'ordonnancement initiale émise vers l'équipement utilisateur comme faisant partie de l'identifiant temporaire de réseau radio, ou conjointement avec celui-ci, communiqué sur le canal de commande de liaison descendante physique du réseau, et
dans lequel l'allocation de bloc de ressources physiques pour l'instance d'ordonnancement initiale est utilisée pour les instances d'ordonnancement suivantes.

2. Procédé selon la revendication 1, dans lequel les informations d'ordonnancement sont fournies conjointement avec des informations de mise en concordance d'un identifiant temporaire de réseau radio (705) de groupe pour le dispositif d'équipement utilisateur.

3. Procédé selon la revendication 1, dans lequel les informations d'ordonnancement sont fournies conjointement avec des informations de configuration d'un identifiant temporaire de réseau radio de groupe pour le dispositif d'équipement utilisateur.

4. Procédé selon l'une quelconque des revendications 1 à 3, dans lequel la temporisation d'une survenue d'ordonnancement suivante pour le service est communiquée au dispositif d'équipement utilisateur dans une instance de d'ordonnancement précédente.

5. Procédé selon la revendication 4, dans lequel l'instance d'ordonnancement précédente survient au démarrage du service.

6. Nœud (1000) dans un réseau de télécommunication sans fil apte à fonctionner pour émettre une émission de point à multipoint à cellule unique pour de multiples dispositifs d'équipement utilisateur (1002) au sein d'une cellule (1001) du réseau, dans lequel le nœud est apte à fonctionner pour :
fournir des informations d'ordonnancement (805) pour le service à au moins l'un des dispositifs respectifs parmi les dispositifs d'équipement utilisateur comme faisant partie d'un identifiant temporaire de réseau radio, ou conjointement avec celui-ci, émis sur un canal de commande de liaison descendante physique du réseau par le nœud, les informations d'ordonnancement comprenant une allocation de bloc de ressources physiques sur un canal partagé de liaison descendante physique du réseau pour une instance d'ordonnancement initiale du service et de multiples instances d'ordonnancement suivantes prédéfinies (807) du service survenant à des intervalles périodiques prédéfinis, pour permettre au dispositif d'équipement utilisateur de surveiller le canal de commande de liaison descendante physique pour une émission selon les intervalles périodiques prédéfinis ;
dans lequel le nœud est apte à fonctionner pour émettre l'instance d'ordonnancement initiale de multiples instances d'ordonnancement prédéfinies du service vers l'équipement utilisateur comme faisant partie de l'identifiant temporaire de réseau radio, ou conjointement avec celui-ci, communiqué sur le canal de commande de liaison descendante physique du réseau par le nœud, et
dans lequel l'allocation de bloc de ressources physiques pour l'instance d'ordonnancement initiale est utilisée pour les instances d'ordonnancement suivantes.

7. Nœud selon la revendication 6, dans lequel le nœud est apte à fonctionner pour fournir les informations d'ordonnancement conjointement avec des informations de mise en concordance d'un identifiant temporaire de réseau radio (705) de groupe devant être émis par le nœud pour le dispositif d'équipement utilisateur.

8. Nœud selon la revendication 6, dans lequel le nœud est apte à fonctionner pour fournir les informations d'ordonnancement conjointement avec des informations de configuration d'un identifiant temporaire de réseau radio de groupe devant être émis par le nœud pour le dispositif d'équipement utilisateur.

9. Dispositif d'équipement utilisateur (101) apte à fonctionner pour recevoir une émission de point à multipoint à cellule unique pour un service dans une cellule (1001) d'un réseau de télécommunication sans fil, dans lequel le dispositif d'équipement utilisateur est apte à fonctionner pour recevoir des informations d'ordonnancement (805) pour le service comme faisant partie d'un identifiant temporaire de réseau radio, ou conjointement avec celui-ci, émis sur un canal de commande de liaison descendante physique du réseau, les informations d'ordonnancement comprenant une allocation de bloc de ressources physiques sur un canal partagé de liaison descendante physique du réseau pour une instance d'ordonnancement initiale du service et de multiples instances d'ordonnancement suivantes prédéfinies (807) du service survenant à des intervalles périodiques prédéfinis, pour permettre au dispositif d'équipement utilisateur de surveiller le canal de commande de liaison descendante physique pour une émission selon les intervalles périodiques prédéfinis ;
dans lequel les intervalles périodiques prédéfinis sont communiqués au dispositif d'équipement utilisateur dans l'instance d'ordonnancement initiale émise vers l'équipement utilisateur comme faisant partie de l'identifiant temporaire de réseau radio, ou conjointement avec celui-ci, communiqué sur le canal de commande de liaison descendante physique du réseau, et
dans lequel l'allocation de bloc de ressources physiques pour l'instance d'ordonnancement initiale est utilisée pour les instances d'ordonnancement suivantes.

10. Dispositif d'équipement utilisateur selon la revendication 9, dans lequel le dispositif d'équipement utilisateur est apte à fonctionner pour recevoir les informations d'ordonnancement conjointement avec des informations de mise en concordance d'un identifiant temporaire de réseau radio (705) de groupe pour le dispositif d'équipement utilisateur.

11. Dispositif d'équipement utilisateur selon la revendication 9, dans lequel le dispositif d'équipement utilisateur est apte à fonctionner pour recevoir les informations d'ordonnancement conjointement avec des informations de configuration d'un identifiant temporaire de réseau radio (705) de groupe pour le dispositif d'équipement utilisateur.

12. Produit programme d'ordinateur, comprenant un support utilisable par ordinateur ayant un code de programme lisible par ordinateur incorporé en son sein, ledit code de programme lisible par ordinateur étant conçu pour être exécuté pour mettre en œuvre un procédé, dans un réseau de télécommunications sans fil pour l'ordonnancement d'un service dans une émission de point à multipoint à cellule unique selon l'une quelconque des revendications 1 à 5.

13. Dispositif d'équipement utilisateur selon la revendication 9, dans lequel les intervalles périodiques prédéfinis sont communiqués au dispositif d'équipement utilisateur dans une instance d'ordonnancement initiale émise vers l'équipement utilisateur comme faisant partie d'un identifiant temporaire de réseau radio, ou conjointement avec celui-ci, communiqué sur le canal de commande de liaison descendante physique du réseau.

14. Dispositif d'équipement utilisateur selon la revendication 9, dans lequel les intervalles périodiques prédéfinis représentent un nombre de sous-trames.

15. Dispositif d'équipement utilisateur selon la revendication 9, dans lequel les intervalles périodiques sont communiqués au dispositif d'équipement utilisateur à l'aide d'une signalisation de commande de ressources radio, RRC.

16. Dispositif d'équipement utilisateur selon la revendication 9, dans lequel le dispositif d'équipement utilisateur est apte à fonctionner pour surveiller le canal de commande de liaison descendante physique pour l'ordonnancement correspondant jusqu'à ce qu'il trouve l'ordonnancement, et peut passer en mode veille ou inactif jusqu'à la prochaine occasion d'ordonnancement après une période d'ordonnancement préconfigurée.

17. Dispositif d'équipement utilisateur selon la revendication 9, dans lequel au lieu d'intervalles périodiques prédéfinis, un ordonnancement non périodique est émis.

18. Dispositif d'équipement utilisateur selon la revendication 9, dans lequel le dispositif d'équipement utilisateur est dans un état à commande de ressources radio connectée ou inactive.
